# EUROPÄISCHE PATENTSCHRIFT

(11) **EP 0 591 664 B1**
(45) Veröffentlichungstag und Bekanntmachung des Hinweises auf die Patenterteilung: **02.07.1997**
(21) Anmeldenummer: 93113524.8
(22) Anmeldetag: 24.08.1993
(51) Int. Cl.: H01G 9/08

(54) **Elektrolytkondensator für hohe Wechselstrombelastbarkeit**
Electrolytic capacitor with high alternative current loading capacity
Condensateur électrolytique susceptible de supporter une haute tension alternative

(30) Priorität: 29.09.1992 DE 9213103 U
(43) Veröffentlichungstag der Anmeldung: 13.04.1994
(73) Patentinhaber: SIEMENS MATSUSHITA COMPONENTS GmbH & CO KG, 81617 München (DE)
(72) Erfinder: Will, Norbert Dipl.-Phys., D-89522 Heidenheim (DE); Schweikert, Wilhelm Dipl.-Ing, D-89522 Heidenheim-Mergelst (DE)
(74) Vertreter: Fuchs, Franz-Josef, Dr.-Ing.

(56) Entgegenhaltungen:
- EP-A- 0 389 664
- DE-A- 869 509
- DE-U- 9 203 739
- PATENT ABSTRACTS OF JAPAN, Bd. 16, Nr. 574 (E-1298)14. Dezember 1992 & JP-A-04 223 319

## Beschreibung

Die Erfindung betrifft einen Elektrolytkondensator für hohe Wechselstrombelastbarkeit, der in ein mit Kühlelementen versehenes metallisches Gehäuse eingebaut ist, und der für einen Betrieb mit einer Zwangskühlung bestimmt ist, die mittels angeblasener Luft vorgenommen wird.

Zur Verbesserung der Belastbarkeit von Elektrolytkondensatoren mit Wechselstrom ist vorgeschlagen worden, den thermischen Innenwiderstand zwischen dem Ort der Wärmeentstehung im Elektrolytkondensator und dem Gehäuse zu verringern (DE 40 28 177 A1, EP 0 389 664 A1). Hierdurch wird der thermische Gesamtwiderstand verstärkt vom verbleibenden äußeren thermischen Widerstand zwischen Gehäuse und Kühlmedium (Luft, Kühlblech) dominiert.

Zur Verringerung des äußeren thermischen Widerstands werden Zwangskühlungsmaßnahmen eingesetzt, wie z. B. die Montage des Elektrolytkondensators auf ein Kühlblech und/oder das Anblasen des Gehäuses mit kühler Luft.

Aus der JP-A 4223319 ist es bekannt, bei einem Elektrolytkondensator zur besseren Wärmeableitung das ganze Gehäuse mit einem Metalldraht schneckenförmig zu umgeben.

Weiterhin ist es aus der DE-PS 869 509 bekannt, einen Behälter für flüssigkeitsimprägnierte Kondensatoren mit rechteckigem oder quadratischem Querschnitt zu verwenden, der oben und/oder unten Randteile mit kreisförmigem Querschnitt besitzt.

Aufgabe der Erfindung ist es, Mittel anzugeben, die eine weitere Verringerung des äußeren thermischen Widerstandes beim Anblasen mit Luft bewirken.

Diese Aufgabe wird erfindungsgemäß dadurch gelöst, daß die Kühlelemente nur in Bereichen des Gehäuses angeordnet sind, die über eine Wärmebrücke mit dem Ort der Wärmeentstehung, dem Kondensatorwickel, verbunden sind.

Zweckmäßige Ausgestaltungen der Kühlelemente sind in den Unteransprüchen angeführt.

Die Erfindungwird anhand der folgenden Ausführungsbeispiele näher erläutert.

In der dazugehörenden Zeichnung zeigen
- FIG 1: eine Prinzipdarstellung der Erfindung,
- FIG 2 bis 5: verschiedene Ausführungsformen von Kühlelementen,
- FIG 6 und 7: zwei Ausführungsformen von Kondensatorgehäusen mit Kühlelementen und
- FIG 8: die Temperaturverteilung in der Wickelachse bzw. der Gehäuseoberfläche für verschiedene Ausführungsformen von Kühlelementen.

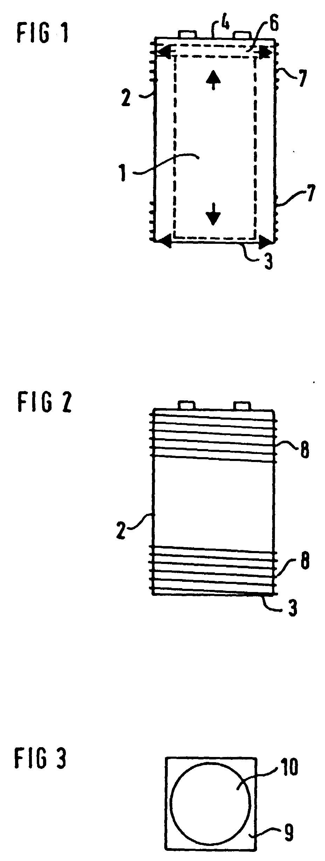

In der FIG 1 ist im Prinzip ein Kondensatorwickel 1 dargestellt, der in ein metallisches Gehäuse 2 eingebaut ist. Der Kondensator weist einen Aufbau auf, wie er in der EP 0 389 664 beschrieben ist. Hierdurch ergeben sich sowohl im Bereich des Gehäusebodens 3 als auch im Bereich der Abschlußscheibe 4 Wärmebrücken 5, 6, so daß ein in der FIG 1 dargestellter Wärmestrom in Pfeilrichtung resultiert.

Im Bereich der Wärmebrücken 5, 6 sind Kühlelemente 7 angeordnet.

Das Gehäuse 2 wird mittels eines in der FIG nicht dargestellten Ventilators durch Anblasen mit kühler Luft abgekühlt.

In der FIG 2 ist ein Ausführungsbeispiel dargestellt, bei dem die Kühlelemente aus einer Spiralfeder 8 bestehen, die im Bereich der Wärmebrücken angeordnet ist. Zur Herstellung wird ein thermisch gut leitender Draht mit rundem oder vorzugsweise mindestens einseitig abgeflachtem an der Wandung des Gehäuses 2 anliegendem Querschnitt zu einer "Feder" gebogen. Diese Spiralfeder wird über das Kondensatorgehäuse 2 gestülpt.

FIG 3 zeigt ein weiteres Ausführungsbeispiel eines Kühlelementes, das aus einem Blech 9 mit einem Innenloch 10 besteht. Das Kühlelement wird mittels einer Preßpassung auf dem Kondensatorgehäuse angebracht.

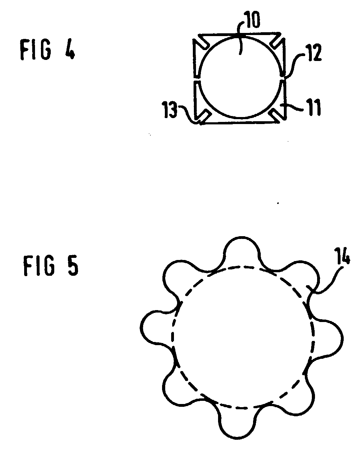

In der FIG 4 ist eine weitere Ausführungsform eines Kühlelements dargestellt, das aus einem gestanzten Kühlblech 11 besteht, dessen Innenloch 10 einen etwas kleineren Durchmesser als das Kondensatorgehäuse aufweist. An der einen Seite des Kühlblechs 11 ist ein durchgehender Schlitz 12 angeordnet.

Bei dieser Ausführungsform ergibt sich eine Befestigung auf dem Kondensatorgehäuse mittels Federkräften.

Zur besseren Wärmeableitung können in dem quadratischen Kühlblech weitere Schlitze 13 angeordnet sein.

In der FIG 5 ist ein Kühlelement 14 in Wellblechform dargestellt, das auch mit Schlitzen oder Löchern versehen sein kann.

Dieses Kühlelement bietet sich an, wenn sich der Luftstrom entlang der Gehäuseachse bewegt. Unter diesen Bedingungen ist das Kühlelement gemäß FIG 5 das effektivste, weil die Flächenvergrößerung um den Faktor 4 bis 5 voll wirksam wird.

Statt eines Wellblechs kann auch ein Profil verwendet werden.

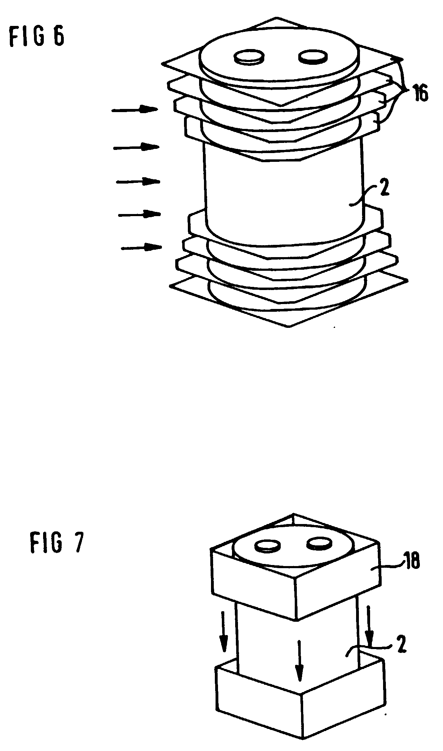

FIG 6 zeigt ein Kondensatorgehäuse 2 mit Kühlelementen 16, die zu einer horizontalen Belüftung ausgelegt sind. Die Kühlelemente 16 sind quadratisch bzw. sechseckig geformt und benötigen so in einer Kondensatorbatterie nur die ansonst ungenützten Lücken.

In der FIG 7 ist ein weiteres Kondensatorgehäuse 2 dargestellt, das mit Kühlelementen 18 in Kastenform ohne Boden bzw. Deckel versehen ist und für eine vertikale Beströmung geeignet ist.

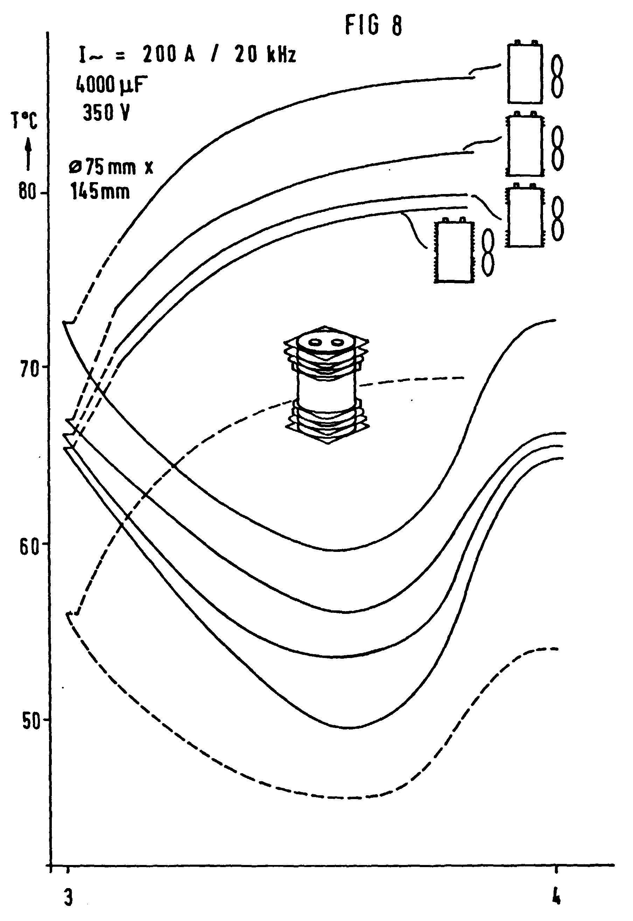

In der FIG 8 sind verschiedene Temperaturverteilungen eines Kondensators mit den Nenndaten 4000 µF/350 V dargestellt, der in ein Gehäuse der Abmessungen 0̸ 75 mm x 145 mm eingebaut ist. Die Temperaturverteilungen gelten für einen Wechselstrom I = 200 A/20 kHz, wobei die nach oben gerichteten Kurven die Temperatur an der Wickelachse und die nach unten gerichteten die Temperatur der Gehäuseoberfläche vom Becherboden 3 bis zur Abschlußscheibe 4 wiedergeben.

Als Kühlelemente dienten die in FIG 2 dargestellten Spiralfedern mit einer unterschiedlichen Anzahl von Windungen.

Wie der FIG 8 unmittelbar zu entnehmen ist, wird die Kühlwirkung um so besser, je mehr Windungen die Spiralfeder aufweist.

Ferner ist in der FIG 8 gestrichelt eine berechnete Temperaturverteilung für einen Kondensator gemäß FIG 6 dargestellt, bei dem die Kühlwirkung größer als bei den Ausführungsbeispielen nach FIG 2 ist.

## Patentansprüche

1. Elektrolytkondensator für hohe Wechselstrombelastbarkeit, der in ein mit Kühlelementen versehenes metallisches Gehäuse eingebaut ist, und der für einen Betrieb mit einer Zwangskühlung lung bestimmt ist, die mittels angeblasener Luft vorgenommen wird,
**dadurch gekennzeichnet,** daß die Kühlelemente (7) nur in Bereichen des Gehäuses (2) angeordnet sind, die über eine Wärmebrücke (5, 6) mit dem Ort der Wärmeentstehung, dem Kondensatorwickel (1), verbunden sind.

2. Elektrolytkondensator nach Anspruch 1,
**dadurch gekennzeichnet,**
daß die Kühlelemente (7) aus einer über das Gehäuse (1) gestülpten Spiralfeder (8) aus einem thermisch gut leitendem Werkstoff besteht.

3. Elektrolytkondensator nach Anspruch 2,
**dadurch gekennzeichnet,**
daß die Spiralfeder (8) aus einem Draht mit rundem Querschnitt besteht.

4. Elektrolytkondensator nach Anspruch 2,
**dadurch gekennzeichnet,**
daß die Spiralfeder (8) aus einem Draht mit einseitig, am Gehäuse (2) angeordneten, abgeflachtem Querschnitt besteht.

5. Elektrolytkondensator nach Anspruch 1,
**dadurch gekennzeichnet,**
daß die Kühlelemente aus gestanzten Kühlblechen (9, 11) bestehen.

6. Elektrolytkondensator nach Anspruch 5,
**dadurch gekennzeichnet,**
daß die Kühlbleche (9, 11) eine quadratische Form besitzen.

7. Elektrolytkondensator nach Anspruch 5,
**dadurch gekennzeichnet,**
daß die Kühlbleche eine sechseckige Form besitzen.

8. Elektrolytkondensator nach Anspruch 1,
**dadurch gekennzeichnet,**
daß die Kühlbleche eine Wellblechform (14) besitzen.

9. Elektrolytkondensator nach einem der Ansprüche 5 bis 8,
**dadurch gekennzeichnet,**
daß die Kühlbleche (9, 11, 14) mittels Preßpassung am Gehäuse angeordnet sind.

10. Elektrolytkondensator nach einem der Ansprüche 5 bis 8,
**dadurch gekennzeichnet,**
daß die Kühlbleche (9, 11, 14) mittels Federkräften am Gehäuse angeordnet sind.

11. Elektrolytkondensator nach Anspruch 10,
**dadurch gekennzeichnet,**
daß zur Erzielung der Federkraft der Innendurchmesser (10) des Kühlelements (11) geringfügig kleiner als der Außendurchmesser des Gehäuses (1) ist und daß das Kühlelement (11) einseitig einen Schlitz (12) besitzt.

## Claims

1. Electrolytic capacitor for a high alternating current loading capacity, which is installed in a metal housing provided with coating elements, and which is intended for use with forced cooling which is undertaken by means of blasted air, characterized in that the cooling elements (7) are arranged only in regions of the housing (2) which are connected via a heat bridge (5, 6) to the location of heat generation, the capacitor element (1).

2. Electrolytic capacitor according to Claim 1, characterized in that the cooling elements (7) comprise a helical spring (8) which is slipped over the housing (1) and is made from a material which is a good conductor of heat.

3. Electrolytic capacitor according to Claim 2, characterized in that the helical spring (8) comprises a wire with a round cross-section.

4. Electrolytic capacitor according to Claim 2, characterized in that the helical spring (8) comprises a wire with a cross-section which is flattened on one side and arranged on the housing (2).

5. Electrolytic capacitor according to Claim 1, characterized in that the cooling elements comprise pierced cooling plates (9, 11).

6. Electrolytic capacitor according to Claim 5, characterized in that the cooling plates (9, 11) have a square shape.

7. Electrolytic capacitor according to Claim 5, characterized in that the cooling plates have a hexagonal shape.

8. Electrolytic capacitor according to Claim 1, characterized in that the cooling plates have the shape of a corrugated plate (14).

9. Electrolytic capacitor according to one of Claims 5 to 8, characterized in that the cooling plates (9, 11, 14) are arranged on the housing by means of an interference fit.

10. Electrolytic capacitor according to one of Claims 5 to 8, characterized in that the cooling plates (9. 11. 14) are arranged on the housing by means of spring forces.

11. Electrolytic capacitor according to Claim 10, characterized in that for the purpose of achieving the spring force the inside diameter (10) of the cooling element (11) is slightly smaller than the outside diameter of the housing (1) and in that the cooling element (11) has a slit (12) on one side.

## Revendications

1. Condensateur électrolytique susceptible de supporter une haute tension alternative, qui est logé dans un boîtier métallique pourvu d'éléments de refroidissement et qui est destiné à fonctionner avec un refroidissement forcé s'effectuant grâce à de l'air soufflé,
caractérisé en ce que les éléments de refroidissement (7) sont situés seulement dans des zones du boîtier (2) qui sont reliées au lieu de production de chaleur, le bobinage du condensateur (1), par un pont thermique (5, 6).

2. Condensateur électrolytique selon la revendication 1, caractérisé en ce que les éléments de refroidissement (7) sont formés par un ressort spiral (8) fait d'un matériau à bonne conductibilité thermique qui est passé sur le boîtier (1).

3. Condensateur électrolytique selon la revendication 2, caractérisé en ce que le ressort spiral (8) est formé par un fil à section transversale ronde.

4. Condensateur électrolytique selon la revendication 2, caractérisé en ce que le ressort spiral (8) est formé par un fil ayant une section transversale aplatie sur un côté qui est située sur le boîtier (2).

5. Condensateur électrolytique selon la revendication 1, caractérisé en ce que les éléments de refroidissement sont formés par des tôles de refroidissement (9, 11) découpées.

6. Condensateur électrolytique selon la revendication 5, caractérisé en ce que les tôles de refroidissement (9, 11) ont une forme carrée.

7. Condensateur électrolytique selon la revendication 5, caractérisé en ce que les tôles de refroidissement ont une forme hexagonale.

8. Condensateur électrolytique selon la revendication 1, caractérisé en ce que les tôles de refroidissement ont la forme d'une tôle ondulée (14).

9. Condensateur électrolytique selon l'une des revendications 5 à 8, caractérisé en ce que les tôles de refroidissement (9, 11, 14) sont disposées sur le boîtier grâce à un ajustage serré.

10. Condensateur électrolytique selon l'une des revendications 5 à 8, caractérisé en ce que les tôles de refroidissement (9, 11, 14) sont disposées sur le boîtier grâce à des forces élastiques.

11. Condensateur électrolytique selon la revendication 10, caractérisé en ce que, pour obtenir la force élastique, le diamètre intérieur (10) de l'élément de refroidissement (11) est légèrement inférieur au diamètre extérieur du boîtier (1) et en ce que l'élément de refroidissement (11) est pourvu d'une fente (12) sur un côté.
